# EUROPEAN PATENT APPLICATION

(11) **EP 1 477 506 A1**
(43) Date of publication of application: **17.11.2004**
(21) Application number: 04011224.5
(22) Date of filing: 12.05.2004
(51) Int. Cl.: C08G 63/78, C08G 63/82, C08G 63/84, B01J 21/02, B01J 27/16

(54) **Polymerization catalyst for preparing polyesters, preparation of polyethylene terephthalate and use of polymerization catalyst**

(30) Priority: 15.05.2003 DE 10322099
(71) Applicant: DuPont Sabanci Polyester Europe B.V., 2132 HP Hoofddorp (NL)
(72) Inventor: Schönnagel, Matthias, 59069 Hamm (DE); Witschas, Michael, Dr., 59069 Hamm (DE); Turan, Ahmet Celalettin, Seyhan/Adana (TR)
(74) Representative: Leifert & Steffan

(57) **Abstract**

The invention relates to a polymerization catalyst for preparing polyesters. The catalyst contains aluminium hydroxide and/or aluminium acetate as a first component and at least one phosphoric or phosphonic ester as a second component. The invention also relates to a polymerization process for preparing polyethylene terephthalate from dimethyl terephthalate and ethylene glycol or terephthalic acid and ethylene glycol by transesterification and polycondensation respectively. The invention further relates to the use of aluminium hydroxide and/or aluminium acetate in combination with at least one phosphoric or phosphonic ester as polymerization catalyst when preparing polyesters by polycondensation or transesterification.

## Description

The invention relates to a polymerization catalyst for preparing polyesters, especially polyethylene terephthalate.

Linear polyesters can be prepared by condensation polymerization between dicarboxylic acids or their functional derivatives such as anhydrides and chlorides on the one hand and diols on the other. Whereas linear polyesters from aliphatic dicarboxylic acids cannot be used directly because of their low softening range, the linear polyesters of terephthalic acid have achieved immense commercial significance as textile fibres or moulding materials. Of these polyesters of terephthalic acid, polyethylene terephthalate is the most important.

Polyethylene terephthalate can be prepared by a polycondensation of terephthalic acid and ethylene glycol. The polycondensation is carried out in two stages. In the first stage, terephthalic acid is esterified with an excess of glycol at 190-280°C under nitrogen. Glycol ester is formed as an intermediate. In the second stage, a condensation is carried out at reduced pressure and a temperature of 290°C for example in the presence of a metal oxide catalyst. The excess glycol released in the process is distilled off. The viscous condensation mass is squeezed off on attainment of the desired viscosity, cooled in water and chipped. Polyethylene terephthalate consists of chain molecules having a molar mass of 15 000 to 30 000 g/mol. They are partly crystalline, and polyethylene terephthalate can attain a crystallinity of 30% to 40%. Owing to its low rate of crystallization, it can also be made in an amorphous grade, by quenching.

As well as from terephthalic acid and ethylene glycol, polyethylene terephthalate may also be prepared by transesterification of dimethyl terephthalate and ethylene glycol.

US-A-5 674 801 discloses a process for preparing polyethylene terephthalate by utilizing a polymerization catalyst comprising a cobalt salt in combination with aluminium chloride, aluminium hydroxide, aluminium acetate or aluminium hydroxychloride.

High molecular weight polyethylene terephthalate often has undesirable colour due to the presence of catalyst residues from the manufacture of terephthalic acid. These catalyst residues include manganese, zinc, iron and molybdenum. The cited US Patent US-A-5 674 801 describes sequestering the metal catalyst residues with phosphoric acid to obtain a final product which ideally is colourless or white. It is known that many metals combine with phosphoric acid in a strongly acidic medium to form heteropolyacids. It is believed that the sequestering of the metal impurities by phosphoric acid is based on this reaction. The disadvantage with this is the use of phosphoric acid, a strong and very aggressive acid.

It is an object of the present invention to provide a polymerization catalyst for preparing polyesters and a polymerization process for preparing polyethylene terephthalate whereby it is possible to prepare polyesters and polyethylene terephthalate in particular which do not exhibit troublesome colour and are instead ideally colourless or white. The use of aggressive acids shall be avoided. It is a further object of the present invention to prepare polyesters which have low levels of diethylene glycol and carboxyl groups in the polymer and which, furthermore, possess very good spinnability, leaving no deposits at the spinnerets, and good thermal stability.

The present objects are achieved by a polymerization catalyst of the kind mentioned at the beginning that contains aluminium hydroxide and/or aluminium acetate as a first component and at least one phosphoric or phosphonic ester as a second component.

Of the aluminium compounds mentioned, aluminium hydroxide is preferable because of its low toxicity and because of its environmental compatibility.

The two components of the polymerization catalyst according to the invention can be present as a mixture. However, to enable the polymerization catalyst to be used more flexibly, it is advantageous when the first and second components are separated in space and form a kit. In this case, the components can be mixed in the desired mixing ratios directly before use or be added to the polymerization batch in succession in the course of the preparation of a polyester.

Particularly advantageous second components have been determined to be triethyl phosphate and triethyl phosphonoacetate. It has been determined that these compounds are the best complexing agents for the troublesome metals.

Advantageously, the first component and/or the second component are present as a suspension or solution in mono- or diethylene glycol. This facilitates the handling of the catalyst. Since ethylene glycol is an important diol component for the preparation of polyesters, the use of this diol as a suspension or solution medium obviates the use of other solvents which would subsequently have to be removed from the system.

The invention also provides a polymerization process for preparing polyethylene terephthalate from dimethyl terephthalate and ethylene glycol or terephthalic acid and ethylene glycol by transesterification and polycondensation respectively. According to the invention, the reaction of the starting materials is carried out in the presence of aluminium hydroxide and/or aluminium acetate and of at least one phosphoric or phosphonic ester.

The aluminium hydroxide and/or aluminium acetate is used advantageously in a concentration of 50 to 3 500 ppm and preferably of 1 000 to 2 500 based on the final polyethylene terephthalate product. A concentration of less than 50 ppm is not sufficiently effective, and a concentration of more than 3' 500 ppm is not necessary because it yields no further benefit.

Advantageously, in the process according to the invention, the phosphoric and phosphonic esters used are triethyl phosphate and triethyl phosphonoacetate respectively.

The concentration of the triethyl phosphate and/or triethyl phosphonoacetate is advantageously 5 to 150 ppm based on the polyethylene terephthalate to be prepared. In the polymerization process according to the invention, advantageously the aluminium hydroxide and/or aluminium acetate is added to the reaction mixture as a 5 to 50% suspension in ethylene glycol before the start of the reaction and the reaction of the starting materials is advantageously carried out at a temperature of 270 to 300°C at a pressure of 13 332 Pa to 133.32 Pa. These conditions lead to favourable rates of reaction.

When the polyethylene terephthalate is prepared by direct polycondensation of terephthalic acid and ethylene glycol, the triethyl phosphate and/or the triethyl phosphonoacetate are advantageously added during the esterification. When, on the other hand, the polyethylene terephthalate is prepared by a transesterification of dimethyl terephthalate and ethylene glycol, the triethyl phosphate and/or the triethyl phosphonoacetate are advantageously not added until after the transesterification.

The invention also provides for the use of aluminium hydroxide and/or aluminium acetate in combination with at least one phosphoric or phosphonic ester as a polymerization catalyst in the preparation of polyesters by polycondensation or transesterification.

The use of the polymerization catalyst according to the invention and the polymerization process according to the invention make it possible to prepare, without the use of aggressive phosphoric acid, polyesters and polyethylene terephthalate which are colourless to white and have a low level of diethylene glycol and of carboxyl groups in the polymer. The products possess very good spinnability, leaving no deposits at the spinnerets, and good thermal stability.

The invention will now be more particularly described with reference to an illustrative example:

### 1. Comparative example: standard process with antimony trioxide and H₃PO₄

Dimethyl terephthalate (DMT) is fed at 4 770 kg/h to plate 15 of a 23 plate transesterification column. Monoethylene glycol (MEG) is fed at 2 950 kg/h onto plate 18. Together with the monoethylene glycol, 2.21 kg/h of Mn(CH₃COO)₂ × 4H₂O in dissolved form are fed as a transesterification catalyst.

The column is heated by means of a heater utilizing a heat transfer fluid (Dowtherm® registered trademark of Dow Chemical Co.). DMT and MEG react with each other at elevated temperature under the influence of the catalyst to form the monomer and methanol at a bottom temperature of 242 ± 2°C. Methanol is condensed at the top of the column and partly refluxed to the column for the purpose of temperature control.

The bottom of the transesterification column is fed with a continuous 140 kg/h of antimony trioxide dissolved in MEG as a polymerization catalyst. This rate corresponds to 3.35 kg/h of Sb₂O₃.

The monomer produced in the bottom is then transferred through the monomer line into the prepolymerization column. 6.0 l/h of 10% phosphoric acid in MEG, which corresponds to 0.714 kg/h of H₃PO₄, is injected into the monomer line to deactivate the manganese acetate. Furthermore, 54 l/h of a 20% TiO₂ suspension in MEG, which corresponds to 13.8 kg/h of TiO₂, is injected into the monomer line as a delustrant. The two substances undergo intensive mixing with the monomer.

The monomer starts to polymerize in the 16 plate prepolymerization column at up to 292°C under the influence of the antimony trioxide, heat supplied by means of a heater heated by means of a heat transfer fluid (Dowtherm® ) and a vacuum down to 2 133.12 Pa. 95% of the MEG released in the course of this reaction is condensed at the top of the prepolymerization column and withdrawn from the process.

The prepolymer then passes by gravity and pressure difference through a siphoning line into a horizontally disposed kettle equipped with a stirrer consisting of a multiplicity of discs. The prepolymer is then polymerized at 295°C and 266.64 Pa to the desired viscosity (= average molecular weight) by further withdrawal of MEG. The viscosity is adjusted by vacuum control to an NLRV of 22.5, which corresponds to an IV (intrinsic viscosity) of about 0.65.

NLRV, a measure of relative viscosity, is the ratio at 25°C of the flow times in a capillary viscometer for the pure solvent and a solution. The solution is 4.75 weight % of polymer in solvent. The solvent is hexafluoroisopropanol.

The ready-prepared polymer is subsequently pumped at 4 788 kg/h to a spinning machine and at 290°C through spinneret plates to form 15 dtex fibre having a single hole void content of 20% and air quenched to below 50°C.

Thereafter, the filaments are wet-drawn to 6.1 dtex, crimped, relaxed, cut and baled.

### 2. Inventive example with Al(OH)₃ and triethyl phosphonoacetate (TEPA)

The standard process with antimony trioxide and H₃PO₄ is repeated in the same equipment and under the same operating conditions except that the addition of antimony trioxide and H₃PO₄ is omitted.

Instead, 6.0 kg/h of 30% TEPA in MEG, which corresponds to 1.8 kg/h of TEPA, is added to the bottom of the transesterification column.
To prepare the mixture, TEPA having a purity of at least 98% and a maximum acid number of 2.0 mg of KOH/g was added at room temperature to the appropriate amount of MEG with stirring.

70 kg/h of a 20% suspension of Al(OH)₃ in MEG, which corresponds to 14 kg/h of Al(OH)₃, are injected into the monomer line.

To prepare the mixture, Al(OH)₃ having a purity of at least 99%, a water content of max 0.35%, a maximum of 0.25% of soluble Na₂O₅ and an average particle size of 0.25 µm was added to the appropriate amount of MEG at room temperature with stirring.

### 3. Table comparing standard and inventive example

| Parameter | Standard | Invention |
|---|---|---|
| As-spun fibre colour | | |
| Minolta colorimeter | | |
| L colour, exclude | 86.5 | 88.5 |
| B colour, exclude | 6.4 | 6.8 |
| A colour, exclude | 0.7 | 0.0 |

| Analyses on polymer | | |
|---|---|---|
| Mn in ppm | 114 | 111 |
| P in ppm | 38 | 40 |
| Sb in ppm | 269 | 16* |
| Al(OH)₃ in ppm | 10* | 3 053 |
| TiO₂ in % | 0.289 | 0.288 |
| DEG in % | 0.63 | 0.64 |

| Drawn fibre (fiberfill) | | |
|---|---|---|
| Initial bulk in cm | 10.0 | 10.3 |
| Support bulk in cm | 2.1 | 2.2 |
| Tenacity in cN/dtex | 2.6 | 2.9 |
| Elongation in % | 30 | 31 |

| | | |
|---|---|---|
| * detection limit of X-ray analyser used. | | |

The material according to the invention showed no impairment in spinning operation (pack pressure or position failures).
No Al(OH)₃ particles were detectable in the fibre cross-section.

## Claims

1. Polymerization catalyst for preparing polyesters, containing aluminium hydroxide and/or aluminium acetate as a first component and at least one phosphoric or phosphonic ester as a second component.

2. Polymerization catalyst according to Claim 1, **characterized in that** the first and second components are separated in space and form a kit.

3. Polymerization catalyst according to Claim 1 or 2, **characterized in that** the second component is triethyl phosphate or triethyl phosphonoacetate.

4. Polymerization catalyst according to Claim 1-3, **characterized in that** the first component and/or the second component are present as a suspension or solution in mono- or diethylene glycol.

5. Polymerization process for preparing polyethylene terephthalate from dimethyl terephthalate and ethylene glycol or terephthalic acid and ethylene glycol by transesterification and polycondensation respectively, **characterized in that** the reaction of the starting materials is carried out in the presence of aluminium hydroxide and/or aluminium acetate and of at least one phosphoric or phosphonic ester.

6. Process according to Claim 5, **characterized in that** the aluminium hydroxide and/or aluminium acetate is used in a concentration of 50 to 3 500 ppm based on the polyethylene terephthalate.

7. Process according to Claim 5 or 6, **characterized in that** the phosphoric and phosphonic esters used are triethyl phosphate and triethyl phosphonoacetate respectively.

8. Process according to Claim 7, **characterized in that** triethyl phosphate and/or triethyl phosphonoacetate are used in a concentration of 5 to 150 ppm based on the polyethylene terephthalate.

9. Process according to Claim 5 to 8, **characterized in that** the aluminium hydroxide and/or aluminium acetate is added to the reaction mixture as a 5 to 50% suspension in ethylene glycol before the start of the reaction and the reaction of the starting materials is carried out at a temperature of 270 to 300°C at a pressure of 13 332 Pa to 133.32 Pa.

10. Process according to Claim 5 to 9, **characterized in that** the triethyl phosphate and/or the triethyl phosphonoacetate are added before, during or after the esterification in the case of the polycondensation of terephthalic acid and ethylene glycol and after the transesterification in the case of the transesterification of dimethyl terephthalate and ethylene glycol.

11. Use of aluminium hydroxide and/or aluminium acetate in combination with at least one phosphoric or phosphonic ester as a polymerization catalyst in the preparation of polyesters by polycondensation or transesterification.
